# EUROPEAN PATENT APPLICATION

(11) **EP 4 779 320 A1**
(43) Date of publication of application: **22.07.2026**
(21) Application number: 26150040.9
(22) Date of filing: 02.01.2026
(51) Int. Cl.: G01P 3/36, G01S 17/00, G01S 17/87, G01S 17/88

(54) **TECHNIQUES FOR COMPENSATING FOR ERRORS IN AN OPTICAL AIR DATA SYSTEM**

(30) Priority: 21.01.2025 US 202519032984
(71) Applicant: Honeywell International Inc., Charlotte, NC 28202 (US)
(72) Inventor: DRASAL, Zbynek, Charlotte, 28202 (US); DOBBINS, Thomas, Charlotte, 28202 (US); WIEBOLD, Matthew, Charlotte, 28202 (US)
(74) Representative: Haseltine Lake Kempner LLP

(57) **Abstract**

Techniques are provided for symmetrically positioning lines of sights of a pair of emitting optics and receiving optics on and/or in a surface of a body of a vehicle. Such symmetrical positioning aides in determining whether at least one measured free stream air velocity is in error. Upon determining that at least one measured free stream air velocity is in error, then a velocity correction factor for each measured free stream air velocity determined to be in error is determined and/or an alert about each error is transmitted to an operator of the vehicle and/or to at least one other system.

## Description

### BACKGROUND

A light detection and ranging (LIDAR) system may be used in an aircraft for determining one or more state variables of the aircraft including for example, speed, rate of climb or decent, angle of attack, and/or angle of sideslip. Misalignments in components of the LIDAR system causes systematic bias errors in air data parameter(s) generated by the LIDAR system, *e.g.,* a vector velocity of the aircraft. Further, performance degradation of one or more components during operation can cause measurement error in a LIDAR system.

### SUMMARY

In some aspects, the techniques described herein relate to an apparatus configured to be mounted on and/or in a body of a vehicle, wherein the body is defined by a first Cartesian coordinate system including a first z axis parallel to a longitudinal axis of the body pointing from a rear to a front of the body, a first x axis laterally bisecting a top and a bottom of the body, and a first y axis bisecting a left hand side and a right hand side of the body, a LIDAR (light detection and ranging) system includes the apparatus, a laser configured to emit an optical signal to each emitting optics, an optical and electrical processing circuit configured to receive the optical signal and each return optical signal and to generate at least one air data parameter, the apparatus including: a first surface, and N pairs of emitting optics and receiving optics in and/or on the first surface, wherein the first surface is defined by a second x axis and a second y axis of a second Cartesian coordinate system that also includes a second z axis projecting orthogonally from the first surface, wherein N is a first integer greater than one, wherein a emitting optics, of a unique pair, is configured to transmit an optical beam, and wherein the receiving optics, of the unique pair, is configured to receive a return optical signal derived by reflection and/or scattering, from atmosphere, of the optical beam, wherein either (a) each optical beam is transmitted along a unique line of sight (LOS) or (b) each return optical signal is received along the unique LOS; wherein (i) the first and the second y axes are separated by a first signed angle that is a second integer multiplied by ninety degrees, and (ii) the first and the second z axes are separated by a second signed angle that is a third integer multiplied by ninety degrees; wherein each projection of a LOS on the first surface is separated from each projection of an adjacent LOS on the first surface by a separation angle, wherein the separation angle is substantially equal to three hundred and sixty degrees divided by N so that an accuracy of each air data parameter, generated by the LIDAR system, is within a range specified for the LIDAR system; and wherein a projection of one LOS on the first surface is offset from the second x axis by an initial separation angle of substantially a fourth integer multiplied by forty five degrees so that the accuracy of each air data parameter, generated by the LIDAR system, is within the range specified for the LIDAR system.

In some aspects, the techniques described herein relate to a method for determining if one or more velocities measured utilizing apparatus are in error, the method including: emitting a transmitted optical beam from each emitter optics of an apparatus, in and/or on a first surface, along a unique line of sight, wherein the apparatus is configured to be mounted on and/or in a body of a vehicle, wherein the body is defined by a first Cartesian coordinate system including a first z axis parallel to a longitudinal axis of the body pointing from a rear to a front of the body, a first x axis laterally bisecting a top and a bottom of the body, and a first y axis bisecting a left hand side and a right hand side of the body, a LIDAR (light detection and ranging) system includes the apparatus, a laser configured to emit an optical signal to each emitting optics, an optical processing system configured to receive the optical signal and each return optical signal and to generate at least one air data parameter, wherein the apparatus includes: a first surface, and N pairs of emitting optics and receiving optics in and/or on the first surface, wherein the first surface is defined by a second x axis and a second y axis of a second Cartesian coordinate system that also includes a second z axis projecting orthogonally from the first surface, wherein N is a first integer greater than one, wherein emitting optics, of a unique pair, is configured to transmit an optical beam, and wherein the receiving optics, of the unique pair, is configured to receive a return optical signal derived by reflection and/or scattering, from atmosphere, of the optical beam, wherein either (a) each optical beam is transmitted along a unique line of sight (LOS) or (b) each return optical signal is received along the unique LOS; wherein (i) the first and the second y axes are separated by a first signed angle that is a second integer multiplied by ninety degrees, and (ii) the first and the second z axes are separated by a second signed angle that is a third integer multiplied by ninety degrees; wherein each projection of a LOS on the first surface is separated from each projection of an adjacent LOS on the first surface by a separation angle, wherein the separation angle is substantially equal to three hundred and sixty degrees divided by N so that an accuracy of each air data parameter, generated by the LIDAR system, is within a range specified for the LIDAR system; and wherein a projection of one LOS on the first surface is offset from the second x axis by an initial separation angle of substantially a fourth integer multiplied by forty five degrees so that the accuracy of each air data parameter, generated by the LIDAR system, is within the range specified for the LIDAR system; emitting a transmitted optical beam from each emitter optics along a unique line of sight; receiving each received optical signal, derived from a unique transmitted optical beam, at a unique receiving optics in and/or on the first surface; determining a measured free stream air velocity for each line of sight; determining, using each measured free stream air velocity, whether a magnitude of at least one measured free stream air velocity is in error; and determining that at least one measured free stream air velocity is in error, then determining a velocity correction factor for each measured free stream air velocity determined to be in error and/or transmitting an alert about each error to an operator of the vehicle and/or to at least one other system.

In some aspects, the techniques described herein relate to an optical head configured to be mounted on and/or in a body of a vehicle, wherein the body is defined by a first Cartesian coordinate system including a first z axis parallel to a longitudinal axis of the body pointing from a rear to a front of the body, a first x axis laterally bisecting a top and a bottom of the body, and a first y axis bisecting a left hand side and a right hand side of the body, a LIDAR (light detection and ranging) system includes the optical head, a laser configured to emit an optical signal to each emitting optics, an optical processing system configured to receive the optical signal and each return optical signal and to generate at least one air data parameter, the optical head including: a first surface, and N pairs of emitting optics and receiving optics in and/or on the first surface, wherein the first surface is defined by a second x axis and a second y axis of a second Cartesian coordinate system that also includes a second z axis projecting orthogonally from the first surface, wherein N is a first integer greater than one, wherein emitting optics, of a unique pair, is configured to transmit an optical beam, and wherein the receiving optics, of the unique pair, is configured to receive a return optical signal derived by reflection and/or scattering, from atmosphere, of the optical beam, wherein either (a) each optical beam is transmitted along a unique line of sight (LOS) or (b) each return optical signal is received along the unique LOS; wherein (i) the first and the second y axes are separated by a first signed angle that is a second integer multiplied by ninety degrees, and (ii) the first and the second z axes are separated by a second signed angle that is a third integer multiplied by ninety degrees; wherein each projection of a LOS on the first surface is separated from each projection of an adjacent LOS on the first surface by a separation angle, wherein the separation angle is substantially equal to three hundred and sixty degrees divided by N so that an accuracy of each air data parameter, generated by the LIDAR system, is within a range specified for the LIDAR system; wherein a projection of one LOS on the first surface is offset from the second x axis by an initial separation angle of substantially a fourth integer multiplied by forty five degrees so that the accuracy of each air data parameter, generated by the LIDAR system, is within the range specified for the LIDAR system; wherein N is less than five; and wherein each LOS has an elevation angle, with respect to the first surface, of (a) substantially forty five degrees so that the accuracy of each air data parameter, generated by the LIDAR system, is within the range specified for the LIDAR system and when N equals four, (b) substantially 35.2 degrees so that the accuracy of each air data parameter, generated by the LIDAR system, is within the range specified for the LIDAR system and when N equals three, and (c) substantially forty-five degrees so that the accuracy of each air data parameter, generated by then LIDAR system, is within the range specified for the LIDAR system and when N equals two.

### BRIEF DESCRIPTION OF THE DRAWINGS

Understanding that the drawings depict only exemplary embodiments and are not therefore to be considered limiting in scope, the exemplary embodiments will be described with additional specificity and detail through the use of the accompanying drawings, in which:
FIG. 1A illustrates a diagram of one embodiment of an optical head of a LIDAR system configured to be part of, and/or mounted in and/or on, a body of a vehicle;
FIG. 1B illustrates a diagram of one embodiment of the four lines of sight emanating from emitting optics in and/or on a first surface;
FIG. 1C illustrates a diagram of one embodiment of a relationship between first and second Cartesian coordinate systems;
FIG. 1D illustrates a diagram of one embodiment of another relationship between the first and the second Cartesian coordinate systems;
FIG. 1E illustrates a diagram of one embodiment of projections of lines of sight on the first surface;
FIG. 1F illustrates a plan view of one embodiment of a vehicle including a LIDAR system;
FIG. 1G illustrates a side view of one embodiment of a vehicle including a LIDAR system;
FIG. 1H illustrates a block diagram of one embodiment of a LIDAR optical and electronic processing system;
FIG. 2 illustrates a side view of one embodiment of optical heads disposed on or in a side of the body of a vehicle;
FIG. 3 illustrates a flow diagram of an exemplary method for determining if one or more velocities measured utilizing embodiments of the invention illustrated with respect to FIGS. 1A-2 are in error.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that structural, mechanical, and/or electrical changes may be made. Furthermore, each method presented in the drawing figures and the specification is not to be construed as limiting the order in which the individual steps may be performed. The following detailed description is not to be taken in a limiting sense.

Embodiments of the invention diminish the aforementioned errors of a LIDAR system with set(s), *e.g.,* of two, three, or four lines of sight (LOSs) when a body of a vehicle has substantially zero angle of attack and sideslip angle. Each line of sight of a set has a relative orientations with respect to a coordinate system defining a first surface from which each line of sight projects and a relative orientation with respect to each adjacent line of sight. Optionally, each set is projected from an optical head configured to be mounted on and/or in a body of a vehicle. Vehicle as used herein may be a land, sea, space, airborne, or any other type of vehicle, *e.g.,* an aircraft.

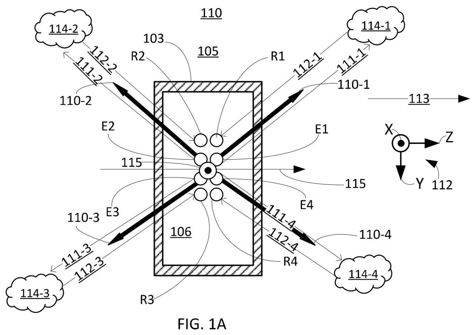

FIG. 1A illustrates a diagram of one embodiment of an optical head 103 of a LIDAR system configured to be part of, and/or mounted in and/or on, a body 105 of a vehicle 110. The body 105 is defined with respect to a first Cartesian coordinate system 112 comprising a first x axis X, a first y axis Y, and a first z axis Z; each axis of the first Cartesian coordinate system 112 is orthogonal to the other two axes of the system 112. The first z axis is parallel to a longitudinal axis 113, of the body 105, which points from the back to the front of the body 105. Optionally, an atmospheric free stream velocity may be either flow parallel or orthogonal to the body 105, *e.g.,* the optical head 103 therein. Optionally, the first x axis X laterally bisects a top and a bottom of a body of the vehicle, and the first y axis Y bisects a left hand side and a right hand side of the body of the vehicle.

For pedagogical purposes, the illustrated optical head 103 includes four sets each of which includes emitting optics and receiving optics, and four lines of sight (LOSs). Each line of sight extends from a unique emitting optics and is defined in three dimensions by the first Cartesian coordinate system 112. However, as is subsequently described, the optical head 103 may alternatively have more than one set of the emitting optics and the receiving optics and more than one line of sight, *e.g.,* two sets of the emitting optics and the receiving optics and two lines of sight, three sets of the emitting optics and the receiving optics and two lines of sight, or four sets of the emitting optics and the receiving optics and two lines of sight. Each emitting optics and receiving optics of the two, three, or four sets is in and/or on a first surface 106.

A first set includes a first emitting optics E1 and a first receiving optics R1. A second set includes a second emitting optics E2 and a second receiving optics R2. A third set includes a third emitting optics E3 and a third receiving optics R3. A fourth set includes a fourth emitting optics E4 and a fourth receiving optics R4. An end, of each receiving optics of a set, configured to receive a return optical signal is physically adjacent an end, of an optical transmitter of the set, configured to emit an optical beam along a line of sight. Such physical adjacency of the ends, of the receiving optics and the emitting optics of the set, facilitates the receiving optics and the emitting optics having substantially the same line of sight so that the accuracy of each air data parameter, generated by the LIDAR system, is within the range specified for the LIDAR system. Optionally, the accuracy of each air data parameter is an angular accuracy of an angle of attack and/or an angular accuracy of a sideslip angle.

Each emitting optics E1, E2, E3, E4 is configured to emit the optical beam 111-1, 111-2, 111-3, 111-4, along a unique line of sight 110-1, 110-2, 110-3, 110-4, to a unique region of atmosphere 114-1, 114-2, 114-3, 114-4. The return optical signal 112-1, 112-2, 112-3, 112-4 is scattered and/or reflected by the unique region of atmosphere 114-1, 114-2, 114-3, 114-4 back to the receiving optics R1, R2, R3, R4 of the same set as the emitting optics which emitted the optical beam from which the return optical signal was derived. Each emitting optics E1, E2, E3, E4 and each receiving optics R1, R2, R3, R4 includes at least one optical component, *e.g.,* optical window(s), optical lens(es), and/or optical waveguide(s).

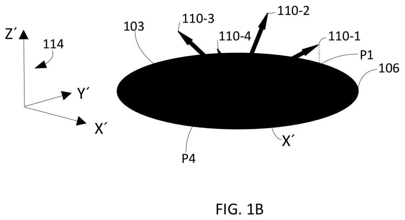

FIG. 1B illustrates a diagram of one embodiment of the four lines of sight 110-1, 110-2, 110-3, 110-4 emanating from emitting optics E1, E2, E3, E4 in and/or on the first surface 106. The first surface 106 is defined a second x axis X' and a second Y axis Y' of a second Cartesian coordinate system 114. The second Cartesian coordinate system 114 includes a second x axis X', a second y axis Y', and a second z axis Z'; each axis of the second Cartesian coordinate system 114 is orthogonal to the other two axes of the system 114. Optionally, the first and the second Cartesian coordinate systems have the same handedness.

Each line of sight 110-1, 110-2, 110-3, 110-4 has a same elevation angle θ with respect to the first surface 106. Optionally, each line of sight 110-1, 110-2, 110-3, 110-4 has an elevation angle θ with respect to the first surface 106 of: (a) substantially forty five degrees so that the accuracy of each air data parameter, generated by the LIDAR system is within the range specified for the LIDAR system when four lines of sight are used, *e.g.,* forty five degrees plus or minus 1 or 2.5 degrees, (b) substantially 35.2 degrees so that the accuracy of each air data parameter, generated by the LIDAR system, is within the range specified for the LIDAR system when three lines of sight are used, *e.g.,* 35.2 degrees plus or minus 1 or 2.5 degrees, and (c) substantially forty-five degrees so that the accuracy of each air data parameter, generated by then LIDAR system, is within the range specified for the LIDAR system when two lines of sight are used, *e.g.,* forty five degrees plus or minus 1 or 2.5 degrees.

The aforementioned elevation angles θ provides linear independence of individual measurements associated with each LOS (which must point away from the body of the vehicle). Thus, fewer LOSs, and correspondingly fewer pairs of emitter optics and receiver optics, are required to determine a given the number of air data parameters which are sought, and such air data parameter are generated with increased accuracy.

Each line of sight 110-1, 110-2, 110-3, 110-4 has a two dimensional projection on the first surface 106. For pedagogical purposes, only a projection P1, P4, of each of the first and the fourth lines of sight, is illustrated in FIG. 1B. A projection of one line of sight, *e.g.,* the projection P1 of the first line of sight, is offset from the second x axis X' by an initial separation angle φ₀ of substantially a fourth integer multiplied by forty five degrees so that the accuracy of each air data parameter, generated by the LIDAR system, is within the range specified for the LIDAR system, *e.g.,* the fourth integer multiplied by forty five degrees plus or minus 1 or 2.5 degrees. Each projection of a line of sight P1 on the first surface 106 is separated from each projection of an adjacent line of sight P4 on the first surface 106 by a separation angle Δφ. The separation angle Δφ is substantially equal to three hundred and sixty degrees divided by a first integer greater than one so that an accuracy of each air data parameter, generated by the LIDAR system, is within a range specified for the LIDAR system, *e.g.,* three hundred and sixty degrees plus or minus 1 or 2.5 degrees divided by the first integer greater than one.

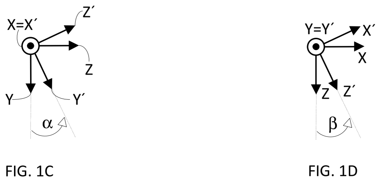

FIG. 1C illustrates a diagram of one embodiment of a relationship between the first and the second Cartesian coordinate systems. In FIG. 1C, the first y axis Y and the second y axis Y' are separated by a first signed angle α that is a second integer multiplied by ninety degrees. Optionally, the first x axis X and the second x axis X' are the same. Optionally, the first x axis X and the second x axis X' are the same, and the first y axis Y and the second y axis Y' are the same.

FIG. 1D illustrates a diagram of one embodiment of another relationship between the first and the second Cartesian coordinate systems. In FIG. 1D, the first z axis Z and the second z axis Z' are separated by a second signed angle β that is a third integer multiplied by ninety degrees. Optionally, the first y axis Y and the second y axis Y' are the same. Optionally, the first signed angle equals zero degrees and the second signed angle equals the third integer multiplied by ninety degrees, or the second signed angle equals zero degrees and the first signed angle equals the second integer multiplied by ninety degrees.

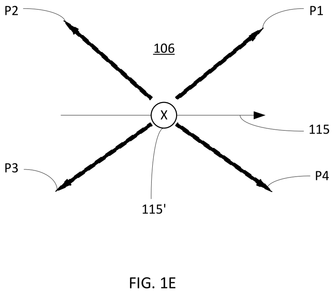

FIG. 1E illustrates a diagram of one embodiment of projections P1, P2, P3, P4 of lines of sight on the first surface 106. For pedagogical purposes, the illustrated embodiment is for four projections of lines of sight on the first surface 106: a first projection P1, a second projection P2, a third projection P3, and a fourth projection P4. However, if three lines of sight are utilized then there will be three projections on the first surface 106; if there are two lines of sight, then there will be two projections on the first surface 106.

Optionally, the sets of emitting optics and receiving optics, e.g., the optical head 103, may be on and/or in a portion of the body 105, of the vehicle 110, that is a side, or a front (*e.g.,* nose) or rear (*e.g.,* tail) of the body 105. When at least one set of emitting optics and receiving optics, *e.g.,* of the optical head 103, in and/or on the first surface 106 are implemented according to embodiments of the invention and each of (a) the angle of attack of the vehicle 110, *e.g.,* the body 105 thereof, with respect to a free stream air velocity and (b) a sideslip angle of the vehicle 110, *e.g.,* the body 105 thereof, with respect to the free stream air velocity is substantially zero, then:
(i) when the free stream air velocity 115 flows in a direction substantially parallel to the first surface 106 (or parallel free stream air velocity) including the at least one set of emitting optics and receiving optics, a LIDAR system measures a component of the free stream air velocity in a direction of a projection P1, P4 of each line of sight, on the first surface 106, when each line of sight, or projection thereof, of the emitting optics of each set is displaced from the direction of the parallel free stream air velocity 115 by substantially a non-zero integer multiple of forty five degrees. Each line of sight, or projection thereof P1, P4 thereof, which has a vector component is in a same direction as the direction of the parallel free stream air velocity 115 measures a positive vector velocity of the parallel free stream air velocity 115. For example, each set, of receiving optics and emitting optics having a line of sight, may be disposed on a side of the vehicle 110, *e.g.,* the body 105. Each line of sight, or projection P2, P3 thereof, which has a vector component in an opposite direction as the direction of the parallel free stream air velocity 115 has measures a negative vector velocity; and
(ii) when the free stream air velocity 115' flows in a direction substantially orthogonal to the first surface 106 (or orthogonal free stream air velocity 115'), the LIDAR system measures a component of the orthogonal free stream air velocity 115' in a direction of the projection, of the line of sight, on the first surface 106 when each line of sight, or projection thereof, of the emitting optics of each set is displaced from the direction of the orthogonal free stream air velocity 115' by substantially a non-zero integer multiple of forty five degrees. Each line of sight of the emitting optics, or projection P1, P2, P3, P4 thereof, has a vector component substantially orthogonal to the direction of the orthogonal free stream air velocity 115', measures a substantially zero vector velocity. For example, each set, of the receiving optics and the emitting optics having a line of sight, may be disposed on a front or a nose, or a back or a tail, of the vehicle 110, *e.g.,* the body 105.
For example, each of the angle of attack with respect to a free stream air velocity 115 and sideslip angle of the body 105 with respect to a free stream air velocity 115 is substantially zero when the vehicle 110, *e.g.,* the body 105 thereof, is in a wind tunnel or is in cruise travel (or flight).

With respect to FIG. 1E, for either of the parallel free stream air velocity 115 or the orthogonal free stream air velocity 115', a first measured velocity is measured by a LIDAR system using a first set of a first receiving optics and a first emitting optics with a first line of sight projection P1, a second measured velocity is measured by the LIDAR system using a second set of a second receiving optics and a second emitting optics with a second line of sight projection P2 , a third measured velocity is measured by the LIDAR system using a third set of a third receiving optics and a third emitting optics with a third line of sight projection P3, and a fourth measured velocity is measured by the LIDAR system using a fourth set of a fourth receiving optics and a fourth emitting optics with a fourth line of sight projection P4. The first measured velocity equals the free stream air velocity plus a first error velocity component. The second measured velocity equals the free stream air velocity plus a second error velocity component. The third measured velocity equals the free stream air velocity plus a third error velocity component. The fourth measured velocity equals the free stream air velocity plus a fourth error velocity component.

Assuming that each set of emitting optics and receiving optics and any optical componentry optically coupling each set to an optical / electrical processing system has same optical characteristics and external influences on, *e.g.,* sunlight incident on and/or icing over, each set are the same, each of the first, the second, the third, and the fourth error velocity components should be the same. When the first, the second, the third, and the fourth error velocity components, a magnitude of each of the foregoing velocity components, or a magnitude of each of the foregoing velocity components having the same sign are the same, then such error velocity components represent a systematic bias error of the LIDAR system.

Practically though, such error velocity components differ, *e.g.,* due to manufacturing tolerances, etc. Thus, when the vehicle 110 is initially built, and/or periodically or aperiodically thereafter, the LIDAR system in the vehicle may be tested, *e.g.,* in a wind tunnel or during cruise flight in an environment which creates no obstructions for emitting optics or receiver (for example no or little sun light, no or little icing, and/or no or little dust on or about the vehicle 110) to characterize each error component. Optionally, each measured velocity measured with physically adjacent emitting optics, *e.g.,* in and/or on a same optical head 103, of the LIDAR system, is adjusted by a velocity correction factor uniquely associated with a measured velocity so that each measured velocity, magnitude thereof, or a magnitude of each of velocity components having the same sign are the same is equal.

Optionally, during normal cruise travel or flight of the vehicle 110, the measured velocities, magnitude thereof, or a magnitude of each of velocity components having the same sign are the same are compared for each measured velocity. Optionally, this is performed after the foregoing mentioned calibration. When a difference, or magnitude thereof, between a measured velocity, or an magnitude thereof, measured with emitting optics and one or more other measured velocities, or a magnitude thereof, measured with one or more physically adjacent other emitting optics *e.g.,* in and/or on a same optical head 103, of the LIDAR system exceeds a velocity threshold value, then an alert is sent by the LIDAR system to operator(s), *e.g.,* pilot(s), of the vehicle 110 and/or one or more other systems on and/or off the vehicle 110.

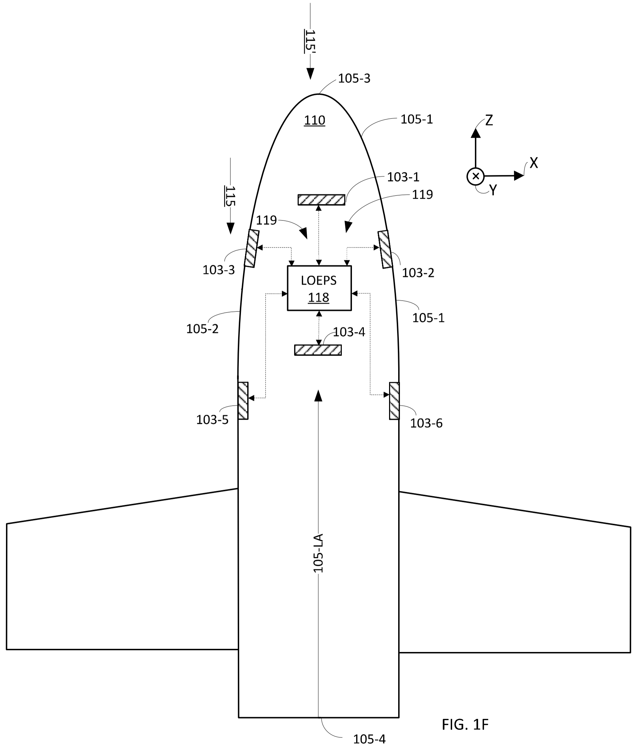

FIG. 1F illustrates a plan view of one embodiment of a vehicle 110 including a LIDAR system 119. The LIDAR system 119 includes a LIDAR optical and electronic processing system (LOEPS or LIDAR optical and electronic processing circuitry) 118 optically coupled, *e.g.,* by optical waveguide, to one or more optical heads 103-1, 103-2, 103-3, 103-4, 103-5, 103-6. The LIDAR optical and electronic processing system 118 includes electronic processing circuitry (*e.g.,* processor circuitry coupled to memory circuitry) and optical processing components, *e.g.,* an optical sensor (for example, a charged coupled device or a complementary metal oxide semiconductor (CMOS) sensor), a Fabry-Perot interferometer, optical waveguide(s), optical filter(s), optical lens(es), and/or optical mirror(s)).

The body 105, of the vehicle 110, has a left or port side 105-1, a right or starboard side 105-1, a front or nose 105-3, and a rear end or a tail end 105-4. The body 105 includes a longitudinal axis 105-LA bisecting the left side 105-1 and the right side 105-2.

For pedagogical purposes, FIG. 1F illustrates six optical heads 103-1, 103-2, 103-3, 103-4, 103-5, 103-6. The first and the fourth optical heads 103-1, 103-4 may each be located on a top or bottom of the body 105. The second and the sixth optical heads 103-2, 103-6 are illustrated on the right side 105-2. The third and the fifth optical heads 103-3, 103-5 are illustrated on the left side 105-1.

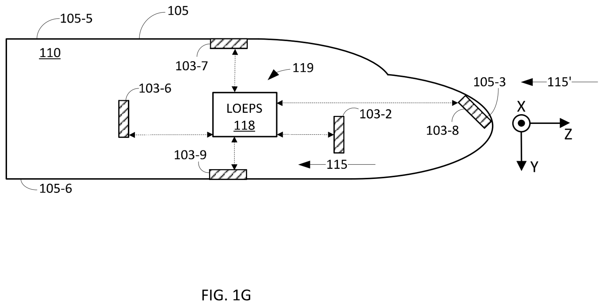

FIG. 1G illustrates a side view of one embodiment of a vehicle 110 including a LIDAR system 119. For pedagogical purposes, the illustrated LIDAR system 119 includes the second optical head 103-2, the sixth optical head 103-6, and the following other optical heads:
(i) a seventh optical head 103-7 on a top 105-5 of the body 105;
(ii) an eighth optical head 103-8 in the front or nose 105-3 of the body; and
(iii) a ninth optical head 103-9 on the bottom 105-6 of the body 105.
The LIDAR system 119 may be implemented with one or more optical heads in any location on the body 105. Thus, embodiments of the invention are not limited to the pedagogical examples illustrated in FIGS. 1F and 1G.

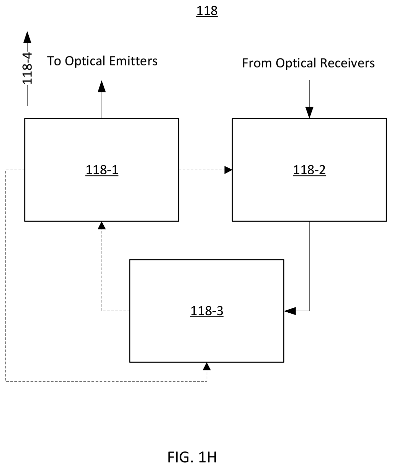

FIG. 1H illustrates a block diagram of one embodiment of a LIDAR optical and electronic processing system (LOEPS) 118. The illustrated LOEPS 118 includes at least one laser 118-1, an optical processing system (or optical processing circuit) 118-2, and an electrical processing system (or electrical processing circuit) 118-3.

The at least one laser 118-1 is configured to emit a transmitted optical signal 118-4 to each emitting optics. Each emitting optics is configured to convert the transmitted optical signal to an optical beam emitted by the emitting optics. Optionally, the at least one laser 118-1 is optically coupled to the optical processing system 118-2 and is configured to provide the transmitted optical signal to the optical processing system 118-2 so that the optical processing system 118-2 can provide data about the transmitted optical signal to the electrical processing system 118-3. Optionally, the at least one laser 118-1 is coupled to the electrical processing system 118-3 and is configured to provide data about the transmitted optical signal to the electrical processing system 118-3.

The optical processing system 118-2 is configured to filter, amplify, and/or other transform each return optical signal, and to convert each return optical (after such filtering, amplification, and/or other transformation) to an electrical data about each return optical signal. Optionally, the optical processing system 118-2 includes at least one of: optical filter(s), optical lens(es), a Fabry-Perot interferometer, and an optical sensor.

The electrical processing system 118-3 is configured to receive an electrical signal from the optical processing system 118-2. The electrical processing system 118-3 is further configured to receive data about the transmitted optical signal. The electrical processing system 118-3 is, using data about the transmitted optical signal and data about each return optical signal, also configured to generate at least one air data parameter therefrom.

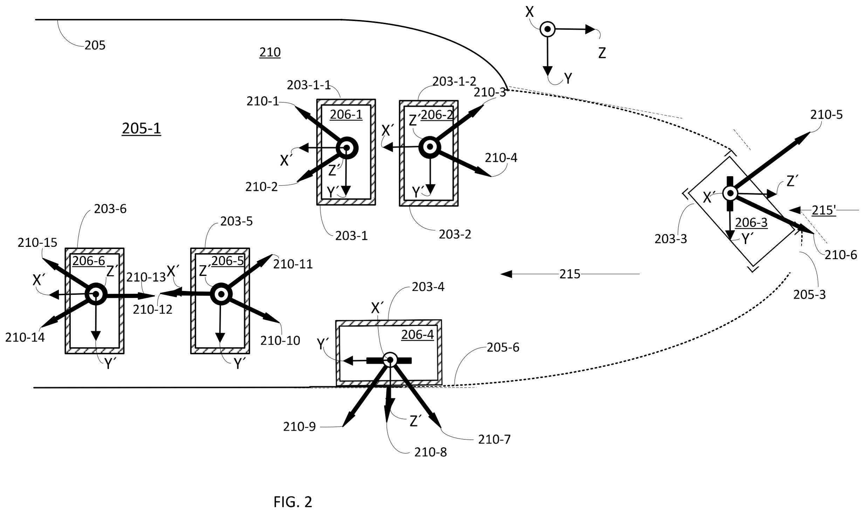

FIG. 2 illustrates a side view of one embodiment of optical heads disposed on or in a side of the body 205 of a vehicle 210. The number, the type, and the position of such optical heads is solely for pedagogical purposes. A different number, different type(s), and/or different position(s) of the optical heads may be alternatively utilized.

A pair of a first optical head 203-1 and a second optical head 203-2 are physically adjacent in and/or on a side 205-1 of the body 205. The first optical head 203-1 has two pairs each of which includes emitting optics and receiving optics ; each pair of emitting optics and are in and/or on a first surface 206-1 of the first optical head 203-1. The second optical head 203-2 has two pairs each of which includes emitting optics and a receiving optics; each pair of emitting optics and receiving optics are in and/or on a first surface 206-2 of the second optical head 203-2. Thus, each optical head 203-1, 203-2, *e.g.,* the emitting optics thereof, have two lines of sight 210-1, 210-2 and 210-3, 210-4. Each of a first pair of lines of sights 210-1, 210-2, of the first optical head 203-1, points away from the nose 205-3 and the side 205-1 of the body 205 and has a projection on the first surface 206-1 of the first optical head 203-1; each of a second pair of lines of sights 210-3, 210-4, of the second optical head 203-2, points away from the tail and the side 205-1 of the body 205 and has a projection on the first surface 206-2 of the second optical head 203-2. The first and the second optical heads 203-1, 203-2 are positioned to replicate a single optical head with four lines of sight described elsewhere herein. For this configuration, the first signed angle α equals zero degrees, and the second signed angle β equals ninety degrees. Projections, of each of the first pair of lines of sights 210-1, 210-2, on the first surface 206-1 of the first optical head 203-1 are separated from one another by ninety degrees. Projections, of each of the second pair of lines of sights 210-1, 210-2 on the first surface 206-2 of the second optical head 203-2 are separated from one another by ninety degrees. A LIDAR system including emitting optics and receiving optics of the first and the second optical heads 203-1, 203-2 is configured to characterize vector velocity components of the parallel free air stream 215 flowing past such optical heads 203-1, 203-2 as described elsewhere herein; the LIDAR system is further configured to characterize, *e.g.,* error components of the vector velocity components as described elsewhere herein.

A third optical head 203-3 is mounted in and/or on about the front (or nose) 205-3 of the body 205. The third optical head 203-3 includes two pairs each of which includes emitting optics and receiving optics; each pair of emitting optics and receiving optics are in and/or on a first surface 206-3 of the third optical head 203-3. Thus, the third optical head 203-3, *e.g.,* the emitting optics thereof, have two lines of sight 210-5, 210-6. Each of the lines of sights 210-5, 210-6, of the third optical head 203-3, points away from both the nose 205-3 and the rear of the body 205 and has a projection on the first surface 206-3 of the third optical head 203-3. For this configuration, the first signed angle α equals zero degrees, and the second signed angle β equals zero degrees. A LIDAR system including emitting optics and receiving optics of the third optical head 203-3 is configured to characterize vector velocity components of the parallel free air stream 215 flowing past such optical head 203-3 as described elsewhere herein; the LIDAR system is further configured to characterize, *e.g.,* error components of such vector components as described elsewhere herein.

A fourth optical head 203-4 is mounted in and/or on the bottom 205-6 of the body 205. The fourth optical head 203-4 includes three pairs each of which includes emitting optics and a receiving optics; each pair of emitting optics and receiving optics are in and/or on a first surface 206-4 of the fourth optical head 203-4. Thus, the fourth optical head 203-4, *e.g.,* the emitting optics thereof, have three lines of sight 210-7, 210-8, 210-9. Each of the lines of sights 210-7, 210-8, 210-9, of the fourth optical head 203-4, points away from bottom 205-6 of the body 205 and has a projection on the first surface 206-4 of the fourth optical head 203-4. For this configuration, the first signed angle α equals minus ninety degrees, and the second signed angle β equals zero degrees. A LIDAR system including emitting optics and receiving optics of the fourth optical head 203-4 is configured to characterize, *e.g.,* vector velocity components of the parallel free air stream 215 flowing past such optical head 203-4 as described elsewhere herein; the LIDAR system is further configured to characterize, *e.g.,* error components of such vector velocity components as described elsewhere herein.

A pair of a fifth optical head 203-5 and a sixth optical head 203-6 are physically adjacent in and/or on a side 205-1 of the body 205. The fifth optical head 203-5 has three pairs each of which includes emitting optics and a receiving optics; each pair of emitting optics and receiving optics are in and/or on a first surface 206-5 of the fifth optical head 203-5. The sixth optical head 203-6 has three pairs each of which includes emitting optics and receiving optics; each pair of emitting optics and receiving optics are in and/or on a first surface 206-6 of the sixth optical head 203-6. Thus, each optical head 203-5, 203-6, *e.g.,* the emitting optics thereof, have three lines of sight 210-10, 210-11, 210-12 and 210-13, 210-14, 210-15. Each of a first trio of lines of sights 210-10, 210-11, 210-12, of the fifth optical head 203-5, points away from the side 205-1 of the body 205 and has a projection on the first surface 206-5 of the fifth optical head 203-5; each of a second trio of lines of sights 210-13, 210-14, 210-15 of the sixth optical head 203-6, points away from the side 205-1 of the body 205 and has a projection on the first surface 206-6 of the sixth optical head 203-6. The fifth and the sixth optical heads 203-5, 203-6 are positioned to replicate, in part, a single optical head with four lines of sight described elsewhere herein. A vector velocity component of the parallel free air stream 215 characterized by the LIDAR using a pair of receiving optics and emitting optics with the twelfth line of sight 210-12 has an opposite sign with respect to the vector velocity components of the parallel free air stream 215 characterized by the LIDAR using a pair of receiving optics and emitting optics with the thirteenth line of sight 210-13; thus, both such vector velocity components can be used to determine error components for one or both such vector velocity components. For this configuration, the first signed angle α equals zero degrees, and the second signed angle β equals ninety degrees. A LIDAR system including emitting optics and receiving optics of the fifth and the sixth optical heads 203-5, 203-6 is configured to characterize vector velocity components of the parallel free air stream 215 flowing past such optical heads 203-5, 203-6 as described elsewhere herein; the LIDAR system is further configured to characterize, *e.g.,* error components of the vector velocity components as described elsewhere herein.

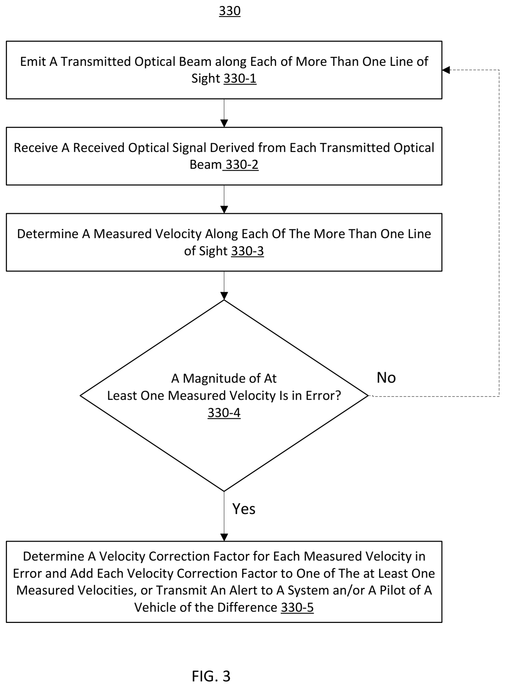

FIG. 3 illustrates a flow diagram of an exemplary method 330 for determining if one or more velocities measured utilizing embodiments of the invention illustrated with respect to FIGS. 1A-2 are in error. Techniques described with respect to the embodiments illustrated by FIGS. 1A-2 may be applicable to the method 330.

The blocks of the flow diagrams herein have been arranged in a generally sequential manner for ease of explanation; however, it is to be understood that this arrangement is merely exemplary, and it should be recognized that the processing associated with the methods (and the blocks shown in the Figures) can occur in a different order (for example, where at least some of the processing associated with the blocks is performed in parallel and/or in an event-driven manner).

In block 330-1, a transmitted optical beam is emitted from each emitter optics, in and/or on a first surface, along a unique line of sight. In block 330-2, each received optical signal, derived from a unique transmitted optical beam, is received by a unique receiver optics, in and/or on the first surface. Each pair of emitter optics and receiver optics is in one or more optical heads. Optionally, the emitting and the receiving is performed when an angle of attack of the body is zero and a sideslip angle of the body is zero.

In block 330-3, a measured free stream air velocity is determined for each line of sight. In block 330-4, using each measured free stream air velocity, whether a magnitude of at least one measured free stream air velocity is in error is determined. Optionally, if a magnitude of at least one measured free stream air velocity is not determined to be in error, then return to block 330-1. If a magnitude of at least one measured free stream air velocity is determined to be in error, then in block 330-5 a velocity correction factor for each measured free stream air velocity determined to be in error is determined and/or an alert about each error is transmitted to an operator, *e.g.,* a pilot, of the vehicle making such measurements and/or to at least one other system, *e.g.,* on and/or off the vehicle making such measurements.

While the present teachings have been illustrated with respect to one or more implementations, alterations and/or modifications can be made to the illustrated examples without departing from the scope of the appended claims. In addition, while a particular feature of the present disclosure may have been described with respect to only one of several implementations, such feature may be combined with one or more other features of the other implementations as may be desired and advantageous for any given or particular function. Furthermore, to the extent that the terms "including," "includes," "having," "has," "with," or variants thereof are used in either the detailed description and/or the claims, such terms are intended to be inclusive in a manner similar to the term "comprising." The term "at least one of" is used to mean one or more of the listed items can be selected. As used herein, the term "one or more of" with respect to a listing of items such as, for example, A and B or A and/or B, means A alone, B alone, or A and B. The term "at least one of" is used to mean one or more of the listed items can be selected.

Terms of relative position as used in this application are defined based on a plane parallel to the conventional plane or working surface of a material (*e.g.,* a layer or a substrate), regardless of orientation. Terms such as "on," "higher," "lower," "over," "top," and "under" are defined with respect to the conventional plane or working surface being on the top surface of a layer or substrate, regardless of orientation. The terms "about" or "substantially" indicate that the value or parameter specified may be somewhat altered, as long as the alteration does not result in nonconformance of the process or structure to the illustrated embodiment. Finally, "exemplary" indicates the description is used as an example, rather than implying that it is an ideal. Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

### Example Embodiments

Example 1 includes an apparatus configured to be mounted on and/or in a body of a vehicle, wherein the body is defined by a first Cartesian coordinate system including a first z axis parallel to a longitudinal axis of the body pointing from a rear to a front of the body, a first x axis laterally bisecting a top and a bottom of the body, and a first y axis bisecting a left hand side and a right hand side of the body, a LIDAR (light detection and ranging) system includes the apparatus, a laser configured to emit an optical signal to each emitting optics, an optical and electrical processing circuit configured to receive the optical signal and each return optical signal and to generate at least one air data parameter, the apparatus comprising: a first surface, and N pairs of emitting optics and receiving optics in and/or on the first surface, wherein the first surface is defined by a second x axis and a second y axis of a second Cartesian coordinate system that also includes a second z axis projecting orthogonally from the first surface, wherein N is a first integer greater than one, wherein a emitting optics, of a unique pair, is configured to transmit an optical beam, and wherein the receiving optics, of the unique pair, is configured to receive a return optical signal derived by reflection and/or scattering, from atmosphere, of the optical beam, wherein either (a) each optical beam is transmitted along a unique line of sight (LOS) or (b) each return optical signal is received along the unique LOS; wherein (i) the first and the second y axes are separated by a first signed angle that is a second integer multiplied by ninety degrees, and (ii) the first and the second z axes are separated by a second signed angle that is a third integer multiplied by ninety degrees; wherein each projection of a LOS on the first surface is separated from each projection of an adjacent LOS on the first surface by a separation angle, wherein the separation angle is substantially equal to three hundred and sixty degrees divided by N so that an accuracy of each air data parameter, generated by the LIDAR system, is within a range specified for the LIDAR system; and wherein a projection of one LOS on the first surface is offset from the second x axis by an initial separation angle of substantially a fourth integer multiplied by forty five degrees so that the accuracy of each air data parameter, generated by the LIDAR system, is within the range specified for the LIDAR system.

Example 2 includes the apparatus of Example 1, wherein N is less than five; and wherein each LOS has an elevation angle, with respect to the first surface, of (a) substantially forty five degrees so that the accuracy of each air data parameter, generated by the LIDAR system, is within the range specified for the LIDAR system and when N equals four, (b) substantially Example 35.2 degrees so that the accuracy of each air data parameter, generated by the LIDAR system, is within the range specified for the LIDAR system and when N equals three, and (c) substantially forty-five degrees so that the accuracy of each air data parameter, generated by then LIDAR system, is within the range specified for the LIDAR system and when N equals two.

Example 3 includes the apparatus of Example 2, either (i) (a) wherein substantially Example 35.2 degrees so that the accuracy of each air data parameter, generated by the LIDAR system, is within the range specified for the LIDAR system is equivalent to Example 35.2 degrees plus or minus two and one half degrees, and (b) wherein substantially forty-five degrees so that the accuracy of each air data parameter, generated by the LIDAR system, is within the range specified for the LIDAR system is equivalent to forty-five degrees plus or minus two and one half degrees, or (ii) (x) wherein substantially Example 35.2 degrees so that the accuracy of each air data parameter, generated by the LIDAR system, is within the range specified for the LIDAR system is equivalent to Example 35.2 degrees plus or minus one degree, and (y) wherein substantially forty-five degrees so that the accuracy of each air data parameter, generated by the LIDAR system, is within the range specified for the LIDAR system is equivalent to forty-five degrees plus or minus one degree.

Example 4 includes the apparatus of any of Examples 1-3, wherein either (i) substantially the fourth integer multiplied by forty five degrees so that the accuracy of each air data parameter, generated by the LIDAR system, is within the range specified for the LIDAR system is equivalent to the fourth integer multiplied by forty five degrees plus or minus one degree, or (ii) substantially the fourth integer multiplied by forty five degrees so that the accuracy of each air data parameter, generated by the LIDAR system, is within the range specified for the LIDAR system is equivalent to the fourth integer multiplied by forty five degrees plus or minus two and one half degrees.

Example 5 includes the apparatus of any of Examples 1-4, wherein either (i) substantially equal to three hundred and sixty degrees divided by N so that the accuracy of each air data parameter, generated by an LIDAR system, is within the range specified for the LIDAR system is equivalent to three hundred and sixty degrees divided by N plus or minus two and one half degrees, or (ii) substantially equal to three hundred and sixty degrees divided by N so that the accuracy of each air data parameter, generated by an LIDAR system, is within the range specified for the LIDAR system is equivalent to three hundred and sixty degrees divided by N plus or minus one degree.

Example 6 includes the apparatus of any of Examples 1-5, wherein the accuracy of each air data parameter is an angular accuracy of an angle of attack and/or an angular accuracy of a sideslip angle.

Example 7 includes the apparatus of any of Examples 1-6, wherein the first and the second Cartesian coordinate systems have a same handedness.

Example 8 includes the apparatus of any of Examples 1-7, wherein the first and the second y axes are separated by a first signed angle when the first and the second x axes are the same, and wherein the first and the second z axes are separated by a second signed angle when the first and the second y axes are the same.

Example 9 includes the apparatus of any of Examples 1-8, wherein the first signed angle equals zero degrees and the second signed angle equals the third integer multiplied by ninety degrees, or the second signed angle equals zero degrees and the first signed angle equals the second integer multiplied by ninety degrees.

Example 10 includes the apparatus of any of Examples 1-9, further comprising the optical and electrical processing circuit.

Example 11 includes a method for determining if one or more velocities measured utilizing apparatus are in error, the method comprising: emitting a transmitted optical beam from each emitter optics of an apparatus, in and/or on a first surface, along a unique line of sight, wherein the apparatus is configured to be mounted on and/or in a body of a vehicle, wherein the body is defined by a first Cartesian coordinate system including a first z axis parallel to a longitudinal axis of the body pointing from a rear to a front of the body, a first x axis laterally bisecting a top and a bottom of the body, and a first y axis bisecting a left hand side and a right hand side of the body, a LIDAR (light detection and ranging) system includes the apparatus, a laser configured to emit an optical signal to each emitting optics, an optical processing system configured to receive the optical signal and each return optical signal and to generate at least one air data parameter, wherein the apparatus comprises: a first surface, and N pairs of emitting optics and receiving optics in and/or on the first surface, wherein the first surface is defined by a second x axis and a second y axis of a second Cartesian coordinate system that also includes a second z axis projecting orthogonally from the first surface, wherein N is a first integer greater than one, wherein emitting optics, of a unique pair, is configured to transmit an optical beam, and wherein the receiving optics, of the unique pair, is configured to receive a return optical signal derived by reflection and/or scattering, from atmosphere, of the optical beam, wherein either (a) each optical beam is transmitted along a unique line of sight (LOS) or (b) each return optical signal is received along the unique LOS; wherein (i) the first and the second y axes are separated by a first signed angle that is a second integer multiplied by ninety degrees, and (ii) the first and the second z axes are separated by a second signed angle that is a third integer multiplied by ninety degrees; wherein each projection of a LOS on the first surface is separated from each projection of an adjacent LOS on the first surface by a separation angle, wherein the separation angle is substantially equal to three hundred and sixty degrees divided by N so that an accuracy of each air data parameter, generated by the LIDAR system, is within a range specified for the LIDAR system; and wherein a projection of one LOS on the first surface is offset from the second x axis by an initial separation angle of substantially a fourth integer multiplied by forty five degrees so that the accuracy of each air data parameter, generated by the LIDAR system, is within the range specified for the LIDAR system; emitting a transmitted optical beam from each emitter optics along a unique line of sight; receiving each received optical signal, derived from a unique transmitted optical beam, at a unique receiving optics in and/or on the first surface; determining a measured free stream air velocity for each line of sight; determining, using each measured free stream air velocity, whether a magnitude of at least one measured free stream air velocity is in error; and determining that at least one measured free stream air velocity is in error, then determining a velocity correction factor for each measured free stream air velocity determined to be in error and/or transmitting an alert about each error to an operator of the vehicle and/or to at least one other system.

Example 12 includes the method of Example 11, wherein the emitting and the receiving is performed when an angle of attack of the body is zero and a sideslip angle of the body is zero.

Example 13 includes an optical head configured to be mounted on and/or in a body of a vehicle, wherein the body is defined by a first Cartesian coordinate system including a first z axis parallel to a longitudinal axis of the body pointing from a rear to a front of the body, a first x axis laterally bisecting a top and a bottom of the body, and a first y axis bisecting a left hand side and a right hand side of the body, a LIDAR (light detection and ranging) system includes the optical head, a laser configured to emit an optical signal to each emitting optics, an optical processing system configured to receive the optical signal and each return optical signal and to generate at least one air data parameter, the optical head comprising: a first surface, and N pairs of emitting optics and receiving optics in and/or on the first surface, wherein the first surface is defined by a second x axis and a second y axis of a second Cartesian coordinate system that also includes a second z axis projecting orthogonally from the first surface, wherein N is a first integer greater than one, wherein emitting optics, of a unique pair, is configured to transmit an optical beam, and wherein the receiving optics, of the unique pair, is configured to receive a return optical signal derived by reflection and/or scattering, from atmosphere, of the optical beam, wherein either (a) each optical beam is transmitted along a unique line of sight (LOS) or (b) each return optical signal is received along the unique LOS; wherein (i) the first and the second y axes are separated by a first signed angle that is a second integer multiplied by ninety degrees, and (ii) the first and the second z axes are separated by a second signed angle that is a third integer multiplied by ninety degrees; wherein each projection of a LOS on the first surface is separated from each projection of an adjacent LOS on the first surface by a separation angle, wherein the separation angle is substantially equal to three hundred and sixty degrees divided by N so that an accuracy of each air data parameter, generated by the LIDAR system, is within a range specified for the LIDAR system; wherein a projection of one LOS on the first surface is offset from the second x axis by an initial separation angle of substantially a fourth integer multiplied by forty five degrees so that the accuracy of each air data parameter, generated by the LIDAR system, is within the range specified for the LIDAR system; wherein N is less than five; and wherein each LOS has an elevation angle, with respect to the first surface, of (a) substantially forty five degrees so that the accuracy of each air data parameter, generated by the LIDAR system, is within the range specified for the LIDAR system and when N equals four, (b) substantially Example 35.2 degrees so that the accuracy of each air data parameter, generated by the LIDAR system, is within the range specified for the LIDAR system and when N equals three, and (c) substantially forty-five degrees so that the accuracy of each air data parameter, generated by then LIDAR system, is within the range specified for the LIDAR system and when N equals two.

Example 14 includes the optical head of Example 13, either (i) (a) wherein substantially Example 35.2 degrees so that the accuracy of each air data parameter, generated by the LIDAR system, is within the range specified for the LIDAR system is equivalent to Example 35.2 degrees plus or minus two and one half degrees, and (b) wherein substantially forty-five degrees so that the accuracy of each air data parameter, generated by the LIDAR system, is within the range specified for the LIDAR system is equivalent to forty-five degrees plus or minus two and one half degrees, or (ii) (x) wherein substantially Example 35.2 degrees so that the accuracy of each air data parameter, generated by the LIDAR system, is within the range specified for the LIDAR system is equivalent to Example 35.2 degrees plus or minus one degree, and (y) wherein substantially forty-five degrees so that the accuracy of each air data parameter, generated by the LIDAR system, is within the range specified for the LIDAR system is equivalent to forty-five degrees plus or minus one degree.

Example 15 includes the optical head of any of Examples 13-14, wherein either (i) substantially the fourth integer multiplied by forty five degrees so that the accuracy of each air data parameter, generated by the LIDAR system, is within the range specified for the LIDAR system is equivalent to the fourth integer multiplied by forty five degrees plus or minus one degree, or (ii) substantially the fourth integer multiplied by forty five degrees so that the accuracy of each air data parameter, generated by the LIDAR system, is within the range specified for the LIDAR system is equivalent to the fourth integer multiplied by forty five degrees plus or minus two and one half degrees.

Example 16 includes the optical head of any of Examples 13-15, wherein either (i) substantially equal to three hundred and sixty degrees divided by N so that the accuracy of each air data parameter, generated by an LIDAR system, is within the range specified for the LIDAR system is equivalent to three hundred and sixty degrees divided by N plus or minus two and one half degrees, or (ii) substantially equal to three hundred and sixty degrees divided by N so that the accuracy of each air data parameter, generated by an LIDAR system, is within the range specified for the LIDAR system is equivalent to three hundred and sixty degrees divided by N plus or minus one degree.

Example 17 includes the optical head of any of Examples 13-16, wherein the accuracy of each air data parameter is an angular accuracy of an angle of attack and/or an angular accuracy of a sideslip angle.

Example 18 includes the optical head of any of Examples 13-17, wherein the first and the second Cartesian coordinate systems have a same handedness.

Example 19 includes the optical head of any of Examples 13-18, wherein the first and the second y axes are separated by a first signed angle when the first and the second x axes are the same, and wherein the first and the second z axes are separated by a second signed angle when the first and the second y axes are the same.

Example 20 includes the optical head of any of Examples 13-19, wherein the first signed angle equals zero degrees and the second signed angle equals the third integer multiplied by ninety degrees, or the second signed angle equals zero degrees and the first signed angle equals the second integer multiplied by ninety degrees.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. An apparatus configured to be mounted on and/or in a body of a vehicle, wherein the body is defined by a first Cartesian coordinate system including a first z axis parallel to a longitudinal axis of the body pointing from a rear to a front of the body, a first x axis laterally bisecting a top and a bottom of the body, and a first y axis bisecting a left hand side and a right hand side of the body, a LIDAR (light detection and ranging) system includes the apparatus, a laser configured to emit an optical signal to each emitting optics, an optical and electrical processing circuit configured to receive the optical signal and each return optical signal and to generate at least one air data parameter, the apparatus comprising:
a first surface, and N pairs of emitting optics and receiving optics in and/or on the first surface, wherein the first surface is defined by a second x axis and a second y axis of a second Cartesian coordinate system that also includes a second z axis projecting orthogonally from the first surface, wherein N is a first integer greater than one, wherein a emitting optics, of a unique pair, is configured to transmit an optical beam, and wherein the receiving optics, of the unique pair, is configured to receive a return optical signal derived by reflection and/or scattering, from atmosphere, of the optical beam, wherein either (a) each optical beam is transmitted along a unique line of sight (LOS) or (b) each return optical signal is received along the unique LOS;
wherein (i) the first and the second y axes are separated by a first signed angle that is a second integer multiplied by ninety degrees, and (ii) the first and the second z axes are separated by a second signed angle that is a third integer multiplied by ninety degrees;
wherein each projection of a LOS on the first surface is separated from each projection of an adjacent LOS on the first surface by a separation angle, wherein the separation angle is substantially equal to three hundred and sixty degrees divided by N so that an accuracy of each air data parameter, generated by the LIDAR system, is within a range specified for the LIDAR system; and
wherein a projection of one LOS on the first surface is offset from the second x axis by an initial separation angle of substantially a fourth integer multiplied by forty five degrees so that the accuracy of each air data parameter, generated by the LIDAR system, is within the range specified for the LIDAR system.

2. The apparatus of claim 1, wherein N is less than five; and
wherein each LOS has an elevation angle, with respect to the first surface, of (a) substantially forty five degrees so that the accuracy of each air data parameter, generated by the LIDAR system, is within the range specified for the LIDAR system and when N equals four, (b) substantially 35.2 degrees so that the accuracy of each air data parameter, generated by the LIDAR system, is within the range specified for the LIDAR system and when N equals three, and (c) substantially forty-five degrees so that the accuracy of each air data parameter, generated by then LIDAR system, is within the range specified for the LIDAR system and when N equals two.

3. The apparatus of claim 2, either (i) (a) wherein substantially 35.2 degrees so that the accuracy of each air data parameter, generated by the LIDAR system, is within the range specified for the LIDAR system is equivalent to 35.2 degrees plus or minus two and one half degrees, and (b) wherein substantially forty-five degrees so that the accuracy of each air data parameter, generated by the LIDAR system, is within the range specified for the LIDAR system is equivalent to forty-five degrees plus or minus two and one half degrees, or (ii) (x) wherein substantially 35.2 degrees so that the accuracy of each air data parameter, generated by the LIDAR system, is within the range specified for the LIDAR system is equivalent to 35.2 degrees plus or minus one degree, and (y) wherein substantially forty-five degrees so that the accuracy of each air data parameter, generated by the LIDAR system, is within the range specified for the LIDAR system is equivalent to forty-five degrees plus or minus one degree.

4. The apparatus of claim 1, wherein either (i) substantially the fourth integer multiplied by forty five degrees so that the accuracy of each air data parameter, generated by the LIDAR system, is within the range specified for the LIDAR system is equivalent to the fourth integer multiplied by forty five degrees plus or minus one degree, or (ii) substantially the fourth integer multiplied by forty five degrees so that the accuracy of each air data parameter, generated by the LIDAR system, is within the range specified for the LIDAR system is equivalent to the fourth integer multiplied by forty five degrees plus or minus two and one half degrees.

5. The apparatus of claim 1, wherein either (i) substantially equal to three hundred and sixty degrees divided by N so that the accuracy of each air data parameter, generated by an LIDAR system, is within the range specified for the LIDAR system is equivalent to three hundred and sixty degrees divided by N plus or minus two and one half degrees, or (ii) substantially equal to three hundred and sixty degrees divided by N so that the accuracy of each air data parameter, generated by an LIDAR system, is within the range specified for the LIDAR system is equivalent to three hundred and sixty degrees divided by N plus or minus one degree.

6. The apparatus of claim 1, wherein the accuracy of each air data parameter is an angular accuracy of an angle of attack and/or an angular accuracy of a sideslip angle.

7. The apparatus of claim 1, wherein the first and the second y axes are separated by a first signed angle when the first and the second x axes are the same, and wherein the first and the second z axes are separated by a second signed angle when the first and the second y axes are the same.

8. The apparatus of claim 1, wherein the first signed angle equals zero degrees and the second signed angle equals the third integer multiplied by ninety degrees, or the second signed angle equals zero degrees and the first signed angle equals the second integer multiplied by ninety degrees.

9. A method for determining if one or more velocities measured utilizing apparatus are in error, the method comprising:
emitting a transmitted optical beam from each emitter optics of an apparatus, in and/or on a first surface, along a unique line of sight, wherein the apparatus is configured to be mounted on and/or in a body of a vehicle, wherein the body is defined by a first Cartesian coordinate system including a first z axis parallel to a longitudinal axis of the body pointing from a rear to a front of the body, a first x axis laterally bisecting a top and a bottom of the body, and a first y axis bisecting a left hand side and a right hand side of the body, a LIDAR (light detection and ranging) system includes the apparatus, a laser configured to emit an optical signal to each emitting optics, an optical processing system configured to receive the optical signal and each return optical signal and to generate at least one air data parameter, wherein the apparatus comprises: a first surface, and N pairs of emitting optics and receiving optics in and/or on the first surface, wherein the first surface is defined by a second x axis and a second y axis of a second Cartesian coordinate system that also includes a second z axis projecting orthogonally from the first surface, wherein N is a first integer greater than one, wherein emitting optics, of a unique pair, is configured to transmit an optical beam, and wherein the receiving optics, of the unique pair, is configured to receive a return optical signal derived by reflection and/or scattering, from atmosphere, of the optical beam, wherein either (a) each optical beam is transmitted along a unique line of sight (LOS) or (b) each return optical signal is received along the unique LOS; wherein (i) the first and the second y axes are separated by a first signed angle that is a second integer multiplied by ninety degrees, and (ii) the first and the second z axes are separated by a second signed angle that is a third integer multiplied by ninety degrees; wherein each projection of a LOS on the first surface is separated from each projection of an adjacent LOS on the first surface by a separation angle, wherein the separation angle is substantially equal to three hundred and sixty degrees divided by N so that an accuracy of each air data parameter, generated by the LIDAR system, is within a range specified for the LIDAR system; and wherein a projection of one LOS on the first surface is offset from the second x axis by an initial separation angle of substantially a fourth integer multiplied by forty five degrees so that the accuracy of each air data parameter, generated by the LIDAR system, is within the range specified for the LIDAR system;
emitting a transmitted optical beam from each emitter optics along a unique line of sight;
receiving each received optical signal, derived from a unique transmitted optical beam, at a unique receiving optics in and/or on the first surface;
determining a measured free stream air velocity for each line of sight;
determining, using each measured free stream air velocity, whether a magnitude of at least one measured free stream air velocity is in error; and
determining that at least one measured free stream air velocity is in error, then determining a velocity correction factor for each measured free stream air velocity determined to be in error and/or transmitting an alert about each error to an operator of the vehicle and/or to at least one other system.

10. The method of claim 9, wherein the emitting and the receiving is performed when an angle of attack of the body is zero and a sideslip angle of the body is zero.
